# EUROPÄISCHE PATENTSCHRIFT

(11) **EP 3 856 614 B1**
(45) Veröffentlichungstag und Bekanntmachung des Hinweises auf die Patenterteilung: **06.11.2024**
(21) Anmeldenummer: 19773397.5
(22) Anmeldetag: 19.09.2019
(51) Int. Cl.: B62D 5/04

(54) **STEUERGERÄT MIT EINER ZUR ERKENNUNG EINER IN EINER HARDWAREKOMPONENTE VORLIEGENDEN SIGNALMINDERUNG AUSGEBILDETEN VORWARNFUNKTION**
CONTROLLER WITH AN EARLY WARNING FUNCTION DESIGNED TO DETECT A SIGNAL REDUCTION PRESENT IN A HARDWARE COMPONENT
APPAREIL DE COMMANDE DOTÉ D'UNE FONCTION DE PRÉ-AVERTISSEMENT CONÇUE POUR DÉTECTER UNE PERTE DE SIGNAL PRÉSENTE DANS UN COMPOSANT MATÉRIEL

(30) Priorität: 27.09.2018 DE 102018123890
(43) Veröffentlichungstag der Anmeldung: 04.08.2021
(73) Patentinhaber: thyssenkrupp Presta AG, 9492 Eschen (LI); thyssenkrupp AG, 45143 Essen (DE)
(72) Erfinder: BALOGH, Andras, 2463 Tordas (HU); KALAPOS, Gábor, 2230 Gyömrö (HU)
(74) Vertreter: thyssenkrupp Intellectual Property GmbH
(86) Internationale Anmeldenummer: PCT/EP2019/075131
(87) Internationale Veröffentlichungsnummer: WO 2020/064493

(56) Entgegenhaltungen:
- CN-A- 105 955 236
- DE-A1- 102004 028 827
- DE-A1- 102010 062 499
- DE-A1- 102015 217 158

## Beschreibung

Die vorliegende Erfindung betrifft ein Steuergerät mit den Merkmalen des Oberbegriffs des Anspruchs 1, eine elektromechanische Kraftfahrzeuglenkung mit einem solchen Steuergerät und ein Verfahren zur Überprüfung von Hardwarekomponenten eines Steuergerätes in einem elektromechanischen Lenksystem eines Kraftfahrzeuges mit den Merkmalen des Oberbegriffs des Anspruchs 6.

Bei elektromechanischen Kraftfahrzeuglenkungen führt ein Ausfall der Lenkung zu einem sicherheitskritischen Zustand des Kraftfahrzeuges. Ein Ausfall der Lenkung muss daher, insbesondere beim autonomen Fahren, verhindert werden. Es ist daher wünschenswert, dass der Fahrer und/oder die Kraftfahrzeugwerkstatt frühzeitig über mögliche in der Zukunft entstehende Probleme informiert wird, um es erst gar nicht zu einem Ausfall kommen zu lassen.

Es ist bekannt, dass Lenkungen mit der Zeit eine geminderte Signalqualität aufweisen, die beispielsweise durch alternde Hardware Komponenten, insbesondere durch Leiterplattenfehler im Steuergerät (ECU) entstehen können. Solche Leiterplattenfehler können z.B. durch CAF (Conductive Anodic Filament) entstehen. CAF ist eine Form der elektrochemischen Filigrankorrosion bei der elektrisch leitende (Kupfer)-Filamente (Fäden) von der Anode abgehend, und unter der Leiterplattenoberfläche in Richtung Kathode wachsen. Die Kupfermigration führt zu leitfähigen Pfaden, so genannte Pathways, die den Isolationswiderstand zwischen den spannungsführenden Leiterbahnen herabsetzen. Zwischen Versorgungsleitungen bewirkt dies im Extremfall einen Kurzschluss, zwischen Signalleitungen ist eine Störung bzw. ein Ausfall der Baugruppe die Folge. Sobald der Isolationswiderstand kleiner ist als eine bestimmte vorgegebene Schwelle, die durch eine Selbstdiagnosefunktion definiert ist, kommt es zu einem plötzlichen Funktionsverlust der Leiterplatte durch Stilllegung (engl. shutdown). Da die Bauteile sicherheitsrelevant sind, ist ein Funktionsverlust unerwünscht. Der Fahrer und/oder die Kraftfahrzeugwerkstatt gehen davon aus, dass die Bauteile korrekt arbeiten, bis es zu einem Funktionsverlust des Bauteils kommt. Alterungsbedingte Änderungen werden nicht kommuniziert.

Aus der Patentschrift EP 3 129 273 B1 ist ein Verfahren zur Verwaltung einer Servolenkung bekannt, bei dem man die Alterung des Lenkmechanismus mittels einer Alterungsfunktion schätzt. Die Alterungsfunktion ist abhängig von einem zeitlichen Integral über die Intensität einer in dem Lenkmechanismus beaufschlagten Kraft. Das geschätzte Alter wird dazu verwendet, ein in dem Lenkmechanismus verwendetes Reibmodell und/oder eine Elastizitätstabelle und/oder die Steifigkeit des Lenkmechanismus anzupassen, um das Lenkgefühl zu verbessern.

Des Weiteren offenbart die DE 10 2004 028 827 A1 ein Verfahren zum Betrieb eines Lenksystems, wobei ein Sicherheitsüberwachungsverfahren das Lenksystem überwacht und aufgrund der Ergebnisse der Überwachung den Systemzustand des Lenksystems bestimmt. Hardwarenahe Sicherheitsfunktionen können dabei die Hardware des Steuergerätes, der Sensoren und der Aktuatoren des Lenksystems überwachen.

Ein gattungsgemäßes Steuergerät für eine Lenkung eines Kraftfahrzeugs wird zudem in der DE 10 2015 217 158 A1 beschrieben.

Es ist Aufgabe der vorliegenden Erfindung, ein Steuergerät für ein Kraftfahrzeuglenksystem anzugeben, bei dem eine Alterung der Signalqualität des Steuergerätes erkannt wird, um einen Fahrer oder eine Kraftfahrzeugwerkstatt frühzeitig über zukünftige Probleme zu informieren.

Diese Aufgabe wird von einem Steuergerät mit den Merkmalen des Anspruchs 1, einer elektromechanischen Kraftfahrzeuglenkung sowie einem Verfahren zur Überprüfung von Hardwarekomponenten eines Steuergerätes in einem elektromechanischen Lenksystem eines Kraftfahrzeuges mit den Merkmalen des Anspruchs 6 gelöst. In den Unteransprüchen sind vorteilhafte Weiterbildungen der Erfindung genannt.

Demnach ist ein Steuergerät für eine Lenkung eines Kraftfahrzeuges mit einer Vielzahl an Selbstdiagnosefunktionen vorgesehen, die jeweils dazu eingerichtet sind, eine Funktion einer zugeordneten Hardwarekomponente des Steuergerätes zu überprüfen, wobei die Selbstdiagnosefunktionen jeweils wenigstens einen Sicherheitsgrenzwert aufweisen, der dazu eingerichtet ist, dass bei einem Überschreiten des wenigstens einen Sicherheitsgrenzwertes die entsprechende Hardwarekomponente abgeschaltet wird. Zudem weist wenigstens eine Selbstdiagnosefunktion wenigstens einen Qualitätsgrenzwert auf, dessen Betrag kleiner ist als der Betrag des wenigstens einen Sicherheitsgrenzwertes derselben Selbstdiagnosefunktion, wobei der wenigstens eine Qualitätsgrenzwert dazu eingerichtet ist, dass ein qualitätsrelevanter Zustand in der zugeordneten Hardwarekomponente bei einem Überschreiten des wenigstens einen Qualitätsgrenzwerts detektiert werden kann. Der wenigstens eine Qualitätsgrenzwert erlaubt es, eine Qualitätsminderung der Hardwarekomponente vor deren Ausfall zu erkennen. Der Fahrer und/oder Mechaniker hat somit genug Zeit eine Gegenmaßnahme einzuleiten, um das Auftreten eines sicherheitskritischen Zustands der Lenkung zu vermeiden. Hardwarekomponenten sind die auf der Leiterplatte angeordneten Bauteile und die Leiterplatte selbst. Bevorzugt weisen mehrere Selbstdiagnosefunktionen zugeordnete Qualitätsgrenzwerte auf.

Erfindungsgemäß ist eine verminderte elektrische Signalqualität in der entsprechenden Hardwarekomponente ein qualitätsrelevanter Zustand.

Vorzugsweise ist eine Auswerteeinheit vorgesehen, die das Vorliegen eines qualitätsrelevanten Zustandes in Form einer Codierung speichert. Dabei kann vorgesehen sein, dass die Auswerteeinheit die gespeicherten Codes auswertet und dazu ausgelegt ist, ein Signal an eine Warneinrichtung weiterzugeben. Die Warneinrichtung kann den Fahrer und/oder die Werkstatt über das Vorliegen des Qualitätsverlustes im Steuergerät informieren.

Es ist weiterhin ein elektromechanisches Lenksystem für ein Kraftfahrzeug vorgesehen, aufweisend
- wenigstens einen Elektromotor,
- einen Drehmomentsensor, der ein vom Fahrer eingebrachtes Drehmoment erfasst, und
- eine elektronische Steuereinheit zur Berechnung von Motorströmen zum Betreiben des Elektromotors, die ein zuvor beschriebenes Steuergerät umfasst. Die zuvor genannten Vorteile ergeben sich auch hier.

Vorzugsweise ist in dem Kraftfahrzeug wenigstens eine Warneinrichtung angeordnet, welche dem Fahrer des Fahrzeuges und/oder eine Kraftfahrzeugwerkstatt über das Vorliegen eines qualitätsrelevanten Zustandes informiert.

Zudem ist ein Verfahren zur Überprüfung von Hardwarekomponenten eines Steuergerätes in einem elektromechanischen Lenksystem eines Kraftfahrzeuges vorgesehen, wobei das Steuergerät eine Vielzahl an Selbstdiagnosefunktionen aufweist, die eine Funktion einer zugeordneten Hardwarekomponente überprüfen, wobei die Selbstdiagnosefunktionen wenigstens einen Sicherheitsgrenzwert aufweisen, und das Verfahren folgende Schritte umfasst:
- Ausgabe eines Wertes einer Selbstdiagnosefunktion,
- Überprüfen, ob der Wert den wenigstens einen zugeordneten Sicherheitsgrenzwert überschreitet,
- Detektieren eines Überschreitens des wenigstens einen Sicherheitsgrenzwertes und Abschalten der entsprechenden Hardwarekomponente, wobei wenigstens eine der Selbstdiagnosefunktionen wenigstens einen Qualitätsgrenzwert aufweist, dessen Betrag kleiner ist als der Betrag des wenigstens einen, derselben Selbstdiagnosefunktion zugeordneten Sicherheitsgrenzwertes, und dass das Verfahren folgende weitere Schritte umfasst:
- Überprüfen, ob der Wert den wenigstens einen zugeordneten Qualitätsgrenzwert überschreitet,
- Detektieren eines Überschreitens des wenigstens einen Qualitätsgrenzwertes,
- Detektieren eines Vorliegens eines qualitätsrelevanten Zustandes.

Das Verfahren erlaubt auf eine einfache und kostengünstige Art und Weise eine Überprüfung der Qualität der Hardware der Steuereinheit. Bevorzugt weisen mehrere der Selbstdiagnosefunktion Qualitätsgrenzwerte auf.

Bevorzugt ist folgender weiterer Verfahrensschritt vorgesehen:
- Speichern eines dem qualitätsrelevanten Zustand zugeordneten Codes.

Die Qualitätsgrenzwerte sind erfindungsgemäß so gebildet, dass eine verminderte elektrische Signalqualität in der entsprechenden Hardwarekomponente als qualitätsrelevanter Zustand detektiert wird.

Es können folgende weitere Verfahrensschritte vorgesehen sein:
- Auswerten der qualitätsrelevanten Zustände in einer Auswerteeinheit und Weitergabe eines qualitätsrelevanten Zustandes an eine Warneinrichtung,
- Ausgabe eines Warnsignals durch die Warneinrichtung, wodurch der Fahrer des Fahrzeuges und/oder eine Kraftfahrzeugwerkstatt über das Vorliegen eines qualitätsrelevanten Zustandes informiert wird.

In einer bevorzugten Ausführungsform ist folgender weiterer Verfahrensschritt vorgesehen:
- Ausgabe eines Hinweises auf eine zu dem qualitätsrelevanten Zustand gespeicherte notwendige Gegenmaßnahme. Der Fahrer und/oder die Werkstatt gelangt so unmittelbar an die zur Reparatur der Steuereinheit benötigten Informationen.

Es ist vorteilhaft, wenn die Auswerteeinheit einen Filter, Fehlerzähler und/oder statistische Maßnahmen umfasst, die ein unnötiges Auslösen eines Warnsignals in der Warneinrichtung verhindern. Für den Fall, dass ein Fehlerzähler in der Auswerteeinheit verwendet wird, weist dieser bevorzugt einen Grenzwert auf, wobei ein Überschreiten des Grenzwertes erst die Weitergabe eines qualitätsrelevanten Zustandes an die Warneinrichtung triggert.

Der Code der qualitätsrelevanten Zustände ist bevorzugt ein DTC.

Vorteilhafterweise sind die Qualitätsgrenzwerte so gebildet, dass eine Minderung des Isolationswiderstandes der Leiterplatte durch CAF als qualitätsrelevanter Zustand detektiert wird.

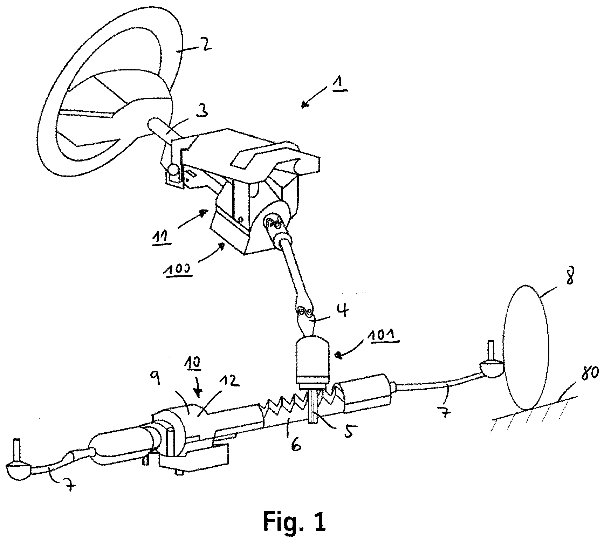

Eine bevorzugte Ausführungsform der Erfindung wird nachfolgend anhand der Figur 1 näher erläutert. Figur 1 zeigt eine schematische Darstellung eines elektromechanischen Kraftfahrzeuglenksystems 1 mit einem Lenkrad 2, das mit einer oberen Lenkwelle 3 drehfest gekoppelt ist. Über das Lenkrad 2 bringt der Fahrer ein entsprechendes Drehmoment als Lenkbefehl in die Lenkwelle 3 ein. Das Drehmoment wird dann über die obere Lenkwelle 3 und untere Lenkwelle 4 auf ein Lenkritzel 5 übertragen. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen.

Die obere Lenkwelle 3 und die untere Lenkwelle 4 sind drehelastisch über einen nicht gezeigten Drehstab miteinander gekoppelt. Eine Drehmomentsensoreinheit 11 erfasst die Verdrehung der oberen Lenkwelle 3 gegenüber der unteren Lenkwelle 4 als ein Maß des an der Lenkwelle 3 oder des Lenkrades 2 manuell ausgeübten Drehmomentes. In Abhängigkeit des von der Drehmomentsensoreinheit 11 gemessen Drehmoments stellt die Servoeinheit 10 eine Lenkunterstützung für den Fahrer bereit. Die Servoeinheit 10 kann dabei als Hilfskraftunterstützungseinrichtung 10, 100, 101 entweder mit einer Lenkwelle 3, dem Lenkritzel 5 oder der Zahnstange 6 gekoppelt sein. Die jeweilige Hilfskraftunterstützung 10, 100, 101 trägt ein Hilfskraftmoment in die Lenkwelle 3, das Lenkritzel 5 und/oder in die Zahnstange 6 ein, wodurch der Fahrer bei der Lenkarbeit unterstützt wird. Die drei unterschiedlichen in Figur 1 dargestellten Hilfskraftunterstützungseinrichtungen 10, 100, 101 zeigen alternative Positionen für deren Anordnung. Üblicherweise ist nur eine einzige der gezeigten Positionen mit einer Hilfskraftunterstützung belegt. Die Servoeinheit 10 weist zur Berechnung der Lenkunterstützung eine elektronische Steuereinheit mit Steuergerät (ECU) 12 auf.

Das Steuergerät 12 weist im Rahmen eines Sicherheitskonzeptes eine Vielzahl an Selbstdiagnosefunktionen auf, die jeweils eine Funktion einer zugeordneten Hardwarekomponente des Steuergerätes 12 überprüfen. Jede Selbstdiagnosefunktion weist Sicherheitsgrenzwerte auf, wobei die Hardwarekomponente stillgelegt (abgeschaltet) wird, wenn sich der Wert der Selbstdiagnosefunktion außerhalb dieser Sicherheitsgrenzwerte befindet. Neben den Sicherheitsgrenzwerten sind Qualitätsgrenzwerte vorgesehen, die enger gefasst sind als die Sicherheitsgrenzwerte, d.h. der Betrag der Sicherheitsgrenzwerte ist größer als der Betrag der Qualitätsgrenzwerte. Die Qualitätsgrenzwerte sind so definiert, dass ein Überschreiten der Qualitätsgrenzwerte für eine verminderte Signalqualität in der entsprechenden Hardwarekomponente spricht. Es ist eine spezielle qualitätsbezogene Codierung (Diagnostic Trouble Code, DTC) für das Überschreiten der Qualitätsgrenzen vorgesehen, wobei ein einzelner, individueller Code eindeutig einer entsprechenden Selbstdiagnosefunktion zugeordnet wird. Kommt es zu einem Überschreiten einer Qualitätsgrenze, wird der entsprechende Code gespeichert. Es ist bevorzugt vorgesehen, dass in dem Kraftfahrzeug wenigstens eine Warneinrichtung angeordnet ist, welche dem Fahrer des Fahrzeuges und/oder die Kraftfahrzeugwerkstatt über die geminderte Signalqualität in der ECU informiert. Die Warnung kann akustisch, z.B. über Sprachausgabe, oder optisch z.B. durch Warnleuchten im Armaturenbrett oder durch Warnhinweise auf einem Bildschirm beispielsweise über bewegliche Fenster, so genannte Popup-Windows, erfolgen. Die Warnung erfolgt bevorzugt mit Bezug zu dem jeweiligen DTC. Es ist auch denkbar, dass die Warnung unabhängig von dem speziellen DTC erfolgt und der Code und ein möglicher Hinweis auf eine Gegenmaßnahme erst mit einem externen Diagnosegerät ausgelesen werden kann.

Für den Fall, dass es durch CAF zu einem verminderten Isolationswiderstand zwischen den spannungsführenden Leiterbahnen auf einer Leiterplatte des ECU kommt, werden ein Paar der aus dem Stand der Technik bekannten Selbstdiagnosefunktionen das Überschreiten ihrer Qualitätsgrenzen detektieren und den Fahrer des Kraftfahrzeuges oder die Kraftfahrzeugwerkstatt bzw. einen Mechaniker darüber informieren und bevorzugt auf notwendige Gegenmaßnahmen hinweisen. Die Funktion der Hardware wird nicht gestoppt, da die Sicherheitsgrenzwerte noch nicht überschritten wurden. Der Fahrer oder Mechaniker hat somit genug Zeit die Gegenmaßnahmen einzuleiten und einen Ausfall der Lenkung zu vermeiden.

Bevorzugt sind Filter, Fehlerzähler und/oder statistische Maßnahmen vorgesehen, um ein unnötiges Auslösen eines Signals in der Warneinrichtung zu verhindern. Der Fehlerzähler weist vorzugsweise einen Grenzwert (Entprellimit, engl. debounce limit) auf, wobei ein Überschreiten des Grenzwertes erst die Detektion eines Qualitätsverlustes triggert. Die zum Auslösen eines Warnsignals notwendige Software kann über Stunden bis hin zu Tagen Daten sammeln, bevor die Warneinrichtung ein Signal wirklich auslöst.

## Patentansprüche

1. Steuergerät (12) für eine Lenkung eines Kraftfahrzeuges mit einer Vielzahl an Selbstdiagnosefunktionen, die jeweils dazu eingerichtet sind, eine Funktion einer zugeordneten Hardwarekomponente des Steuergerätes (12) zu überprüfen, wobei die Selbstdiagnosefunktionen jeweils wenigstens einen Sicherheitsgrenzwert aufweisen, der dazu eingerichtet ist, dass bei einem Überschreiten des wenigstens einen Sicherheitsgrenzwertes die entsprechende Hardwarekomponente abgeschaltet wird, wobei wenigstens eine der Selbstdiagnosefunktionen wenigstens einen Qualitätsgrenzwert aufweist, dessen Betrag kleiner ist als der Betrag des wenigstens einen Sicherheitsgrenzwertes, wobei der wenigstens eine Qualitätsgrenzwert dazu eingerichtet ist, dass ein qualitätsrelevanter Zustand in der zugeordneten Hardwarekomponente bei einem Überschreiten des wenigstens einen Qualitätsgrenzwerts detektiert werden kann, **dadurch gekennzeichnet, dass** eine verminderte elektrische Signalqualität ein qualitätsrelevanter Zustand ist.

2. Steuergerät nach Anspruch 1, **dadurch gekennzeichnet, dass** eine Auswerteeinheit vorgesehen ist, die das Vorliegen eines qualitätsrelevanten Zustandes in Form einer Codierung speichert.

3. Steuergerät nach Anspruch 2, **dadurch gekennzeichnet, dass** die Auswerteeinheit die gespeicherten Codes auswertet und dazu ausgelegt ist ein Signal an eine Warneinrichtung weiterzugeben.

4. Elektromechanisches Lenksystem für ein Kraftfahrzeug aufweisend
• wenigstens einen Elektromotor (9),
• einen Drehmomentsensor (11), der ein vom Fahrer eingebrachtes Drehmoment erfasst, und
• eine elektronische Steuereinheit zur Berechnung von Motorströmen zum Betreiben des Elektromotors (9), die ein Steuergerät (12) nach einem der vorhergehenden Ansprüche umfasst.

5. Kraftfahrzeug mit einem elektromechanischen Lenksystem nach Anspruch 4, **dadurch gekennzeichnet, dass** in dem Kraftfahrzeug wenigstens eine Warneinrichtung angeordnet ist, welche dem Fahrer des Fahrzeuges und/oder eine Kraftfahrzeugwerkstatt über das Vorliegen eines qualitätsrelevanten Zustandes informiert.

6. Verfahren zur Überprüfung von Hardwarekomponenten eines Steuergerätes (12) in einem elektromechanischen Lenksystem (1) eines Kraftfahrzeuges, wobei das Steuergerät (12) eine Vielzahl an Selbstdiagnosefunktionen aufweist, die eine Funktion einer zugeordneten Hardwarekomponente überprüfen, wobei die Selbstdiagnosefunktionen jeweils wenigstens einen Sicherheitsgrenzwert aufweisen, und das Verfahren folgende Schritte umfasst:
- Ausgabe eines Wertes der Selbstdiagnosefunktion,
- Überprüfen, ob der Wert den wenigstens einen zugeordneten Sicherheitsgrenzwert überschreitet,
- Detektieren eines Überschreitens des wenigstens einen Sicherheitsgrenzwertes und Abschalten der entsprechenden Hardwarekomponente, wobei wenigstens eine der Selbstdiagnosefunktionen wenigstens einen Qualitätsgrenzwert aufweist, dessen Betrag kleiner ist als der Betrag des wenigstens einen, derselben Selbstdiagnosefunktion zugeordneten Sicherheitsgrenzwertes, und dass das Verfahren folgende weitere Schritte umfasst:
- Überprüfen, ob der Wert den wenigstens einen zugeordneten Qualitätsgrenzwert überschreitet,
- Detektieren eines Überschreitens des wenigstens einen Qualitätsgrenzwertes,
- Detektieren eines Vorliegens eines qualitätsrelevanten Zustandes,
**dadurch gekennzeichnet, dass** die Qualitätsgrenzwerte so gebildet sind, dass eine verminderte elektrische Signalqualität in der entsprechenden Hardwarekomponente als qualitätsrelevanter Zustand detektiert wird.

7. Verfahren nach Anspruch 6, **dadurch gekennzeichnet, dass** folgender weiterer Verfahrensschritt vorgesehen ist:
- Speichern eines dem qualitätsrelevanten Zustand zugeordneten Codes.

8. Verfahren nach einem der vorhergehenden Ansprüche 6 oder 7, **dadurch gekennzeichnet, dass** folgende weitere Verfahrensschritte vorgesehen sind:
- Auswerten der qualitätsrelevanten Zustände in einer Auswerteeinheit und Weitergabe eines qualitätsrelevanten Zustandes an eine Warneinrichtung,
- Ausgabe eines Warnsignals durch die Warneinrichtung, wodurch der Fahrer des Fahrzeuges und/oder eine Kraftfahrzeugwerkstatt über das Vorliegen eines qualitätsrelevanten Zustandes informiert wird.

9. Verfahren nach einem der vorhergehenden Ansprüche 6 bis 8, **dadurch gekennzeichnet, dass** folgender weiterer Verfahrensschritt vorgesehen ist:
- Ausgabe eines Hinweises auf eine zu dem qualitätsrelevanten Zustand gespeicherte notwendige Gegenmaßnahme.

10. Verfahren nach einem der vorhergehenden Ansprüche 6 bis 9, **dadurch gekennzeichnet, dass** die Auswerteeinheit einen Filter, Fehlerzähler und/oder statistische Maßnahmen umfasst, die ein unnötiges Auslösen eines Warnsignals in der Warneinrichtung verhindern.

11. Verfahren nach Anspruch 10, **dadurch gekennzeichnet, dass** der Fehlerzähler einen Grenzwert aufweist, wobei ein Überschreiten des Grenzwertes erst die Weitergabe eines qualitätsrelevanten Zustandes an die Warneinrichtung triggert.

12. Verfahren nach einem der vorhergehenden Ansprüche 6 bis 11, **dadurch gekennzeichnet, dass** der Code ein DTC ist.

13. Verfahren nach einem der vorhergehenden Ansprüche 6 bis 12, **dadurch gekennzeichnet, dass** die Qualitätsgrenzwerte so gebildet sind, dass eine Minderung des Isolationswiderstandes der Leiterplatte durch CAF als qualitätsrelevanter Zustand detektiert wird.

## Claims

1. A controller (12) for steering of a motor vehicle with a plurality of self-diagnostic functions, each of which is configured for checking a function of an assigned hardware component of the controller (12), wherein each of the self-diagnostic functions has at least one safety limit value, which is configured in such a way that, when the at least one safety limit value is exceeded, the corresponding hardware component is switched off, wherein at least one of the self-diagnostic functions has at least one quality limit value, the absolute value of which is smaller than the absolute value of the at least one safety limit value, wherein the at least one quality limit value is configured in such a way that a quality-relevant state can be detected in the assigned hardware component when the at least one quality limit value is exceeded, **characterized in that** a reduced electrical signal quality is a quality-relevant state.

2. The controller as claimed in claim 1, **characterized in that** an evaluation unit is provided, which stores the presence of a quality-relevant state in the form of a coding.

3. The controller as claimed in claim 2, **characterized in that** the evaluation unit evaluates the stored codes and is designed for forwarding a signal to a warning unit.

4. An electromechanical steering system for a motor vehicle, including
• at least one electric motor (9),
• a torque sensor (11), which detects a torque applied by the driver, and
• an electronic control unit for calculating motor currents for operating the electric motor (9), which includes a controller (12) as claimed in one of the preceding claims.

5. A motor vehicle with an electromechanical steering system as claimed in claim 4, **characterized in that** at least one warning unit is arranged in the motor vehicle, which informs the driver of the vehicle and/or a motor vehicle workshop of the presence of a quality-relevant state.

6. A method for checking hardware components of a controller (12) in an electromechanical steering system (1) of a motor vehicle, wherein the controller (12) comprises a plurality of self-diagnostic functions, which check a functionality of an assigned hardware component, wherein the self-diagnostic functions each include at least one safety limit value, and the method comprises the following steps:
- outputting a value of the self-diagnostic function,
- checking whether the value exceeds the at least one assigned safety limit value,
- detecting an exceedance of the at least one safety limit value and switching off the corresponding hardware component, wherein at least one of the self-diagnostic functions comprises at least one quality limit value, the absolute value of which is smaller than the absolute value of a safety limit value assigned to the same self-diagnostic function, and that the method includes the following further steps:
- checking whether the value exceeds the at least one assigned quality limit value,
- detecting an exceedance of the at least one quality limit value,
- detecting a presence of a quality-relevant state,
**characterized in that** the quality limit values are formed in such a way that a reduced electrical signal quality in the corresponding hardware component is detected as a quality-relevant state.

7. The method as claimed in claim 6, **characterized in that** the following further method step is provided:
- storing a code assigned to the quality-relevant state.

8. The method as claimed in one of the preceding claims 6 or 7, **characterized in that** the following further method steps are provided:
- evaluating the quality-relevant states in an evaluation unit and forwarding a quality-relevant state to a warning unit,
- outputting a warning signal by the warning unit, whereby the driver of the vehicle and/or a motor vehicle workshop are/is informed of the presence of a quality-relevant state.

9. The method as claimed in one of the preceding claims 6 through 8, **characterized in that** the following further method step is provided:
- outputting a reference to a necessary countermeasure stored with respect to the quality-relevant state.

10. The method as claimed in one of the preceding claims 6 through 9, **characterized in that** the evaluation unit comprises a filter, a fault counter, and/or statistical measures that prevent an unnecessary triggering of a warning signal in the warning unit.

11. The method as claimed in claim 10, **characterized in that** the fault counter has a limit value, wherein only an exceedance of the limit value triggers the forwarding of a quality-relevant state to the warning unit.

12. The method as claimed in one of the preceding claims 6 through 11, **characterized in that** the code is a DTC.

13. The method as claimed in one of the preceding claims 6 through 12, **characterized in that** the quality limit values are formed in such a way that a reduction of the insulation resistance of the circuit board by CAF is detected as a quality-relevant state.

## Revendications

1. Contrôleur (12) pour la direction d'un véhicule à moteur avec plusieurs fonctions d'autodiagnostic, chacune d'entre elles étant configurée pour vérifier le fonctionnement d'un composant matériel assigné du contrôleur (12), dans lequel chacune des fonctions d'autodiagnostic a au moins une valeur limite de sécurité, qui est configurée de telle sorte que, lorsque la au moins une valeur limite de sécurité est dépassée, le composant matériel correspondant est mis hors service, dans laquelle au moins une des fonctions d'autodiagnostic a au moins une valeur limite de qualité, dont la valeur absolue est inférieure à la valeur absolue de l'au moins une valeur limite de sécurité, dans laquelle l'au moins une valeur limite de qualité est configurée de manière à ce qu'un état relatif à la qualité puisse être détecté dans le composant matériel affecté lorsque l'au moins une valeur limite de qualité est dépassée, **caractérisé par le fait qu'**une qualité réduite du signal électrique est un état relatif à la qualité.

2. Le contrôleur selon la revendication 1, **caractérisé par** la présence d'une unité d'évaluation qui enregistre la présence d'un état relatif à la qualité sous la forme d'un codage.

3. Le contrôleur selon la revendication 2, **caractérisé par le fait que** l'unité d'évaluation évalue les codes stockés et est conçue pour transmettre un signal à une unité d'avertissement.

4. Système de direction électromécanique pour un véhicule automobile, comprenant
• au moins un moteur électrique (9),
• un capteur de couple (11), qui détecte un couple appliqué par le conducteur, et
• une unité de commande électronique permettant de calculer les courants du moteur pour faire fonctionner le moteur électrique (9), qui comprend un contrôleur (12) tel que revendiqué dans l'une des revendications précédentes.

5. Véhicule automobile équipé d'un système de direction électromécanique selon la revendication 4, **caractérisé par le fait qu'**au moins une unité d'avertissement est disposée dans le véhicule automobile, qui informe le conducteur du véhicule et/ou un atelier automobile de la présence d'un état relatif à la qualité.

6. Méthode de vérification des composants matériels d'un contrôleur (12) dans un système de direction électromécanique (1) d'un véhicule automobile, dans laquelle le contrôleur (12) comprend une pluralité de fonctions d'autodiagnostic, qui vérifient la fonctionnalité d'un composant matériel assigné, dans laquelle les fonctions d'autodiagnostic comprennent chacune au moins une valeur limite de sécurité, et la méthode comprend les étapes suivantes :
- la sortie d'une valeur de la fonction d'autodiagnostic,
- vérifier si la valeur dépasse la valeur limite de sécurité attribuée au moins une fois,
- la détection d'un dépassement de l'au moins une valeur limite de sécurité et la mise hors tension du composant matériel correspondant, dans laquelle au moins une des fonctions d'autodiagnostic comprend au moins une valeur limite de qualité dont la valeur absolue est inférieure à la valeur absolue d'une valeur limite de sécurité attribuée à la même fonction d'autodiagnostic, et dans laquelle le procédé comprend les étapes suivantes :
- vérifier si la valeur dépasse la valeur limite de qualité attribuée au moins une fois,
- détection d'un dépassement de la valeur limite de qualité au moins une fois,
- détecter la présence d'un état relatif à la qualité,
**caractérisé par le fait que** les valeurs limites de qualité sont formées de manière à ce qu'une qualité réduite du signal électrique dans le composant matériel correspondant soit détectée comme un état relatif à la qualité.

7. Méthode selon la revendication 6, **caractérisée par** l'étape suivante de la méthode :
- stocker un code attribué à l'état relatif à la qualité.

8. Méthode selon l'une des revendications précédentes 6 ou 7, **caractérisée par** les étapes suivantes de la méthode :
- évaluer les états relatifs à la qualité dans une unité d'évaluation et transmettre un état relatif à la qualité à une unité d'avertissement,
- l'émission d'un signal d'avertissement par l'unité d'avertissement, le conducteur du véhicule et/ou un atelier automobile étant informé(s) de la présence d'un état relatif à la qualité.

9. Méthode selon l'une des revendications précédentes 6 à 8, **caractérisée par** l'étape suivante de la méthode :
- l'édition d'une référence à une contre-mesure nécessaire stockée en ce qui concerne l'état relatif à la qualité.

10. Procédé selon l'une des revendications précédentes 6 à 9, **caractérisé par le fait que** l'unité d'évaluation comprend un filtre, un compteur de défauts et/ou des mesures statistiques qui empêchent le déclenchement inutile d'un signal d'avertissement dans l'unité d'avertissement.

11. Procédé selon la revendication 10, **caractérisé par le fait que** le compteur de défauts a une valeur limite, dans lequel seul un dépassement de la valeur limite déclenche la transmission d'un état relatif à la qualité à l'unité d'alerte.

12. Méthode selon l'une des revendications précédentes 6 à 11, **caractérisée par le fait que** le code est un DTC.

13. Méthode selon l'une des revendications précédentes 6 à 12, **caractérisée par le fait que** les valeurs limites de qualité sont formées de manière à ce qu'une réduction de la résistance d'isolation de la carte de circuit imprimé par le CAF soit détectée comme un état relatif à la qualité.
